# EUROPEAN PATENT SPECIFICATION

(11) **EP 4 272 114 B1**
(45) Date of publication and mention of the grant of the patent: **20.05.2026**
(21) Application number: 21944621.8
(22) Date of filing: 11.06.2021
(51) Int. Cl.: G06V 20/56, G06V 10/82

(54) **IMPROVED OBJECT DETECTION ON REFLECTIVE SURFACES**
VERBESSERTE OBJEKTERKENNUNG AUF REFLEKTIERENDEN OBERFLÄCHEN
DÉTECTION D'OBJET AMÉLIORÉE SUR DES SURFACES RÉFLÉCHISSANTES

(43) Date of publication of application: 08.11.2023
(73) Proprietor: Shenzhen Yinwang Intelligent Technologies Co., Ltd., Shenzhen, Guangdong 518129 (CN)
(72) Inventor: ORTIZ, Diego, 80807 Munich (DE); QUENTIN, Philipp, 80807 Munich (DE); HINZ, Gereon, 80807 Munich (DE); HU, Wen, Shenzhen, Guangdong 518129 (CN)
(74) Representative: Thun, Clemens
(86) International application number: PCT/CN2021/099713
(87) International publication number: WO 2022/257112

(56) References cited:
- US-A1- 2008 273 751
- US-A1- 2017 323 543
- US-A1- 2019 034 735
- US-A1- 2019 095 701
- US-A1- 2019 221 121
- US-A1- 2019 287 261
- US-A1- 2021 035 329
- US-A1- 2021 125 343
- US-B1- 10 839 560
- WHELAN THOMAS TWHELAN@FB COM ET AL: "Reconstructing scenes with mirror and glass surfaces", ACM TRANSACTIONS ON GRAPHICS, ACM, NY, US, vol. 37, no. 4, 30 July 2018 (2018-07-30), pages 1 - 11, XP058634569, ISSN: 0730-0301, DOI: 10.1145/3197517.3201319
- PARK DAEHEE ET AL: "Identifying Reflected Images From Object Detector in Indoor Environment Utilizing Depth Information", IEEE ROBOTICS AND AUTOMATION LETTERS, IEEE, vol. 6, no. 2, 29 December 2020 (2020-12-29), pages 635 - 642, XP011832377, DOI: 10.1109/LRA.2020.3047796

## Description

### TECHNICAL FIELD

The present application relates to the field of automated driving vehicles, and for example to a system and a method for object detection within a reflective surface.

### BACKGROUND

Automated driving systems perceive the environment for automated behavioural planning and navigation. Accurate estimation and identification of an obstacle-free path is necessary to ensure vehicle operation safety. Environment conditions with reflective surfaces might pose a great challenge, for example to camera-based object detection. An intersection of roads, for example, where a mirror-like structure reflects a nearby incoming vehicle to a host vehicle, is such an environment condition.

Human drivers possess cognitive capacity to perceive reflections and semantically differentiate them from real objects relevant to the driving task, such as traffic participants. Furthermore, human drivers can locate the relevant traffic participants in these reflections and have the semantic understanding that the perceived objects which are reflected, are situated elsewhere in the environment. Modern detection configurations may be less reliable for object detection in scenarios with reflective surfaces: false positives detections caused by the mirror-like structures might be detected as traffic participants.

Furthermore, current driving automation configurations might lack semantic understanding of detections in mirror-like structures, for example regarding position and motion direction of detected objects. If traffic participants such as incoming vehicles are detected in a reflective surface, these detected vehicles may be interpreted, for example, as coming from the front side of the road, resulting in a less optimal operation of the automated vehicle or a possible dangerous reaction to such false positive detections.

Automated driving systems frequently use object detection methods based on visual cameras for perceiving and tracking of objects in an environment. However, these systems seem less reliable for avoiding false positive detections due to reflections. Approaches for detection of reflective surfaces with modern object detection configurations generally use additional sensors. Image-based approaches for automatic detection of reflecting surfaces use geometric models of the image and its reflection, however, has proven rather difficult for practical use.

Therefore, there arises a need to address the aforementioned technical drawbacks in existing systems or technologies for object detection, especially for object detection for automated driving systems.

The document US 2021/0035329 Al shows a system and method for mirror reconstruction

The document Whelan Thomas et al: "Reconstructing scenes with mirror and glass surfaces", XP058634569 also shows a system and method for reconstruction of scenes comprising mirror surfaces and glass surfaces.

### SUMMARY

The present invention is defined by the independent claims. Further advantageous developments are shown by the dependent claims.

Systems and methods according to this disclosure allow improved object detection within a reflective surface.

The foregoing and other objects are achieved by the features of the independent claims. Further implementation forms are apparent from the dependent claims, the description, and the figures.

According to a first aspect, a system for object detection within a reflective surface comprises a processor. The processor is configured to receive at least one input video frame as sequence of input image frames and to detect a reflective surface in the sequence of input image frames. The processor is configured to perform object detection within the reflective surface and differentiate objects detected in the reflective surface as real objects or reflected objects, thereby reducing false-positive detections, wherein the differentiation is based on at least one of geometric coordinates of a respective detection bounding box, a classification score, an associated uncertainty value, a reflection score or a similarity score.

The system is also provided for reducing false-positive detections within reflective surfaces for object detection tasks implemented in a host vehicle with automated driving capabilities. The system may comprise an image capture device configured to capture a video sequence formed from a set of input image frames. The system further may comprises a processor, a memory, a control unit and a communications subsystem. The processor and the memory are configured to train and deploy a neural network module to perform object detection and distinguish between real objects and reflected objects (false-positive detections). The system may be configured to enable communication between the system and other remote computer networks, or devices. The system may further comprise a light emission subsystem, which is controlled by the control unit of the computer device for signaling of light patterns with the purpose of a verification process.

The communications subsystem may be configured to use wireless technology and associated protocols to enable communication between the computing device and other remote computer networks or devices, including but not limited to Vehicle-to-vehicle (V2V) and Vehicle-to-Infrastructure (V2I) communication. The processor is configured to differentiate objects detected in reflective and non-reflective areas for a reduced false-positive detection rate. The light emission subsystem is controlled by the control unit of the computer device for the signaling of light patterns with the purpose of a verification method.

During operation the system is thus enabled to distinguish between real and reflected objects. Optionally, exemplary host vehicle images, V2V-vehicles data comprising V2V-vehicles images and corresponding V2V-vehicle coordinates expressed in a local image coordinate system may be provided.

In a possible implementation form of the system according to the first aspect, the processor is further configured to implement a neural network module configured to: receive at least one input video frame as sequence of input image frames; detect a reflective surface in the sequence of input image frames; perform object detection within the reflective surface, and differentiate objects detected in the reflective surface as real objects or reflected objects, thereby reducing false-positive detections, wherein the differentiation is based on at least one of geometric coordinates of a respective detection bounding box, a classification score, an associated uncertainty value, a reflection score or a similarity score. By the neural network module, the system employs deep learning techniques for improving the false-positive detection of objects, such as vehicles, within reflective surfaces.

In a possible implementation form of the system according to the first aspect, the system comprises an edge case assessment module configured to evaluate the object detection output of the neural network to recognize an edge case. The edge case assessment may be implemented by the processor. Thus, object detections from the neural network during operation are evaluated to distinguish between real and reflected objects, e.g. vehicles. The output of the network is evaluated to recognize potential or specific edge case scenarios that could pose a threat to the integrity of the system. By optionally evaluating the output of the neural network potential, specific edge case scenarios that could pose a threat to the integrity of the system can be recognized.

In a possible implementation form of the system according to the first aspect, the edge case assessment module is configured to verify the detected object as false-positive detection. Thus, the reliability of the object detection is further improved.

In a possible implementation form of the system according to any preceding implementation of the first aspect, the detected object is a host vehicle, a V2V-vehicle or an oncoming vehicle having similar appearance as a host vehicle.

In a possible implementation form of the system according to the first aspect, the processor is further configured to implement a neural network module configured to perform semantic segmentation to identify the reflective surface in an input image frame, and provide at least one sematic image with reflective areas containing the host vehicle or a V2V-vehicle as part of a reflection area.

According to a second aspect, there is provided a method for object detection within a reflective surface. The method is performed by the system for object detection within a reflective surface. The method comprises: receiving at least one input video frame as sequence of input image frames; detecting a reflective surface in the sequence of input image frames; performing object detection within the reflective surface, and differentiating objects detected in the reflective surface as real objects or reflected objects, thereby reducing false-positive detections, wherein the differentiation is based on at least one of geometric coordinates of a respective detection bounding box, a classification score, an associated uncertainty value, a reflection score or a similarity score.

In a possible implementation form of the method according to the second aspect, wherein a neural network comprises performing the method steps: receiving at least one input video frame as sequence of input image frames; detecting a reflective surface in the sequence of input image frames; performing object detection within the reflective surface, and differentiating objects detected in the reflective surface as real objects or reflected objects, thereby reducing false-positive detections, wherein the differentiation is based on at least one of geometric coordinates of a respective detection bounding box, a classification score, an associated uncertainty value, a reflection score or a similarity score.

In a possible implementation form of the method according to the second aspect, the method comprises an edge case assessment comprising: evaluating the object detection output of the neural network to recognize an edge case.

In a possible implementation form of the method according to the second aspect, the detected object is a host vehicle, a V2V-vehicle or an oncoming vehicle having similar appearance as a host vehicle.

In a possible implementation form of the method according to the second aspect, the edge case assessment comprises verifying the detected vehicle as false-positive detection, comprising: retrieving at least one video frame comprising a sequence of image frames; detecting a vehicle within the at least one video frame; evaluating whether the detected vehicle resembles the host vehicle or a V2V-vehicle; emitting a light pattern, if the detection corresponds to the host vehicle appearance, or, upon request for a light pattern emission to the V2V-vehicle, if the detection corresponds to the V2V-vehicle appearance; assessing whether the vehicle detected within the image frames emitted the same light pattern for identifying the vehicle as false-positive detection.

Such verification method enables determining, whether a detected vehicle is a false-positive detection of the host vehicle (or V2V-vehicle) or if it is a real oncoming vehicle with a similar appearance. The video frames may be retrieved from the image capturing device, for example, and the relevant vehicle within the image frames are detected. When assessing if the relevant vehicle appearance resembles the host vehicle or a communicating V2V-vehicle appearance, a request for a light pattern from the V2V-vehicle may be issued in case the relevant vehicle is identified as such. Else a light pattern may be emitted, if the relevant vehicle is identified as the host vehicle. It can be evaluated whether the detected vehicle behaves in an equal manner and emits the same light pattern. The detected vehicle is assessed as a real vehicle or a false-positive detection based on the information obtained.

In a possible implementation form of the method according to the second aspect, wherein a neural network comprises performing the method steps: performing semantic segmentation to identify the reflective surface in an input image frame; providing at least one sematic image with reflective areas containing the host vehicle or a V2V-vehicle as part of a reflection area.

In a possible implementation form of the method according to the second aspect, wherein a unique calibration signature is provided for each respective reflective area of the sematic images. Thus, a method is provided for generating a unique identifier for detected reflective surface for later recognition purposes. The video frames may be received from the image capturing device, optionally also host vehicle images or V2V-vehicle images as input for the neural network. A semantic segmented image is inferred from the neural network that features the reflective areas with the host vehicle or the V2V-vehicle. For example, the detected relevant areas of the semantic segmentation may be cropped from the original image frames. A parametrized black-box model is trained, for example, to reconstruct the provided host vehicle images or V2V-vehicles images from the cropped reflection images. Trained parameters may serves as a unique identifier for the corresponding respective reflective areas, for example. Thus, the reflective areas can be recognized with the unique identifier to perform data association.

According to a third aspect, there is provided a self-driving vehicle including the system for performing the methods, as described above.

According to a fourth aspect, there is provided a method for training a neural network (310) for object detection, the method comprising, in a training stage: receiving training images comprising selected objects to be detected and their respective reflections; providing corresponding labelled images as ground truth; receiving host vehicle images for determining detections as reflections; training the neural network to generate object detection output comprising at least one of geometric coordinates of a respective detection bounding box, a classification score, an associated uncertainty value, a reflection score or a similarity score.

For training of the neural network training data may be included that comprises training images of driving scenarios that include selected objects to be detected and respective reflections. Corresponding labeled images that function as the ground truth may be included. Further exemplary host vehicle images may be included to facilitate the association of detections made in areas, where the host vehicle appearance is also recognized, as detections with a greater probability of being reflections. The neural network may be trained with the training data to generate a prediction output, namely object detections that consists of one of, for example: Geometric Coordinates of the respective detection bounding boxes; a Classification Score; an Associated Uncertainty; a Reflection Score to assess the likelihood of a given detection to be a reflection; Similarity Score regarding the host vehicle to evaluate the similarity of the detection to the host vehicle.

Optionally, training of the neural network may be performed with additional exemplary artificial Vehicle-to-vehicle (V2V) training data to enable the network to make use of further information provided by V2V-communication to increase. Optionally, the training of the neural network may be extended by including additional training data comprising artificial V2V training data that is composed of V2V-vehicles images and corresponding V2V-vehicle coordinates expressed in a local image coordinate system, for example. Also, an additional output, such as the Similarity Score regarding the V2Vvehicle to evaluate the similarity of the detection to the input image of the V2V-vehicle may be included, for example.

According to a fifth aspect, there is provided a method for training a neural network for semantic segmentation, the method comprising, in a training stage: receiving training images comprising driving scenarios providing reflective areas and host vehicle images; providing segmented images as ground truth; training the neural network to generate a semantic segmented image.

Semantic segmentation is employed to identify reflective surfaces in an image that contains the host vehicle or a V2V-connected vehicle as part of the reflection. This may include, for example, training data that comprises exemplary host vehicle images; training images of reflection areas that contain the appearance of the of the previous input; corresponding labeled, semantic segmented images that function as the ground truth; and training the neural network with the training data to generate semantic segmentation as output to identify reflective surfaces in an image that contains the host vehicle or a V2V-connected vehicle as part of the reflection.

In a possible implementation form of the method according to the fifth aspect, the method comprises: a parametrized Black-Box Model trained to reconstruct provided host vehicle images or V2V-vehicles images, wherein parameters of the model are used as a Unique Calibration Signature of the reflective area.

The method according to the second aspect of the invention can be performed by the system according to the first aspect of the invention. Further features and implementation forms of the method according to the second aspect of the invention correspond to the features and implementation forms of the system according to the first aspect of the invention.

The method according to the second aspect can be extended into implementation forms corresponding to the implementation forms of the system according to the first aspect. Hence, an implementation form of the method comprises the feature(s) of the corresponding implementation form of the first apparatus.

The advantages of the methods according to the second aspect are the same as those for the corresponding implementation forms of the system according to the first aspect.

According to a sixth aspect, a computer program product stored on a non-transitory medium and including code instructions which when executed on one or more processors is proposed. The instructions cause the one or more processors to perform a method according to the second aspect or any possible embodiment of the proposed aspects.

The present disclosure thus relates to a system and method for reducing false-positive detections due to reflective surfaces in the context of automated driving. It is contemplated for the deployment in embedded systems for automated driving support. It is also amenable to other computer vision tasks that require false positive detection avoidance due to reflective surfaces.

The systems and methods are provided for reducing false-positive detections within reflective surfaces for object detection tasks implemented in a host vehicle with automated driving capabilities. The processor is configured to train a neural network (NN) to perform object detection and distinguish between real objects and reflected objects (false positives). To enhance the ability of the NN to distinguish between real objects and reflected objects, within the method the NN is provided with exemplary host vehicle images. Therefore, the method facilitates the network to associate detections made in areas, where the host vehicle appearance is also recognized, as detections with a greater probability of being reflections, thus reducing the false positive detection rate. The method may be enhanced to provide the NN with exemplary Vehicle-to-vehicle (V2V) images and corresponding V2V-vehicle coordinates.

Therefore, the method allows the network to make use of further information provided by V2V-communication to associate detections made in areas where the V2V-vehicles appearances are recognized, as detections with a greater probability of being reflections, if these also do not correspond to the actual V2V-vehicles positions.

The neural network (NN) may be trained to perform a semantic segmentation to detect reflective surfaces in an image that contains the host vehicle or a V2V-vehicle as part of the reflection. This segmentation may be used for cropping the reflective area that contains the host vehicle reflection (or other V2Vvehicles reflections) from the original images. A parametrized Black-Box Model may then be trained to reconstruct the provided host vehicle images (or V2V-vehicles images) from the cropped reflection images over several video frames. The parameters of the model can subsequently be used as a Unique Calibration Signature of the reflective area. This unique identifier can be used for later recognition purposes, e.g. data association for tracking.

Details of one or more embodiments are set forth in the accompanying drawings and the description below. Other features, objects, and advantages will be apparent from the description, drawings, and claims.

### BRIEF DESCRIPTION OF DRAWINGS

In the following embodiments of the invention are described in more detail with reference to the attached figures and drawings, in which:
FIG. 1 illustrates an exemplary environment, where object detection is performed;
FIG. 2 shows a schematic of a vehicle and a reflective surface as shown in Fig. 1;
FIG. 3 is a block diagram showing training of a neural network to perform object detection;
FIG. 4 is a block diagram showing inferring of object detections from the trained neural network of FIG. 3;
FIG. 5 is a flow chart for edge case verification;
FIG. 6 is a block diagram showing training of a neural network to perform semantic segmentation;
FIG. 7 is a block diagram showing inferring semantic segmentation from the trained neural network of FIG. 6

In the following identical reference signs refer to identical or at least functionally equivalent features if not explicitly specified otherwise.

### DETAILED DESCRIPTION OF THE DRAWINGS

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific system or apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

False-positive reduction of detected objects in reflective surfaces in the context of automated driving is described in the following. Detailed embodiments of the invention are disclosed. However, the disclosed embodiments are only exemplary and serve as illustrations, models or patterns of numerous and alternative forms, variations and combinations thereof. Furthermore, the described sensors, processors, storage devices and further detection and tracking subsystems may be embodied in hardware, software or firmware of the automated vehicle or a combination thereof. The described systems and methods are directed to reducing false-positive detections of reflective surfaces in object detections.

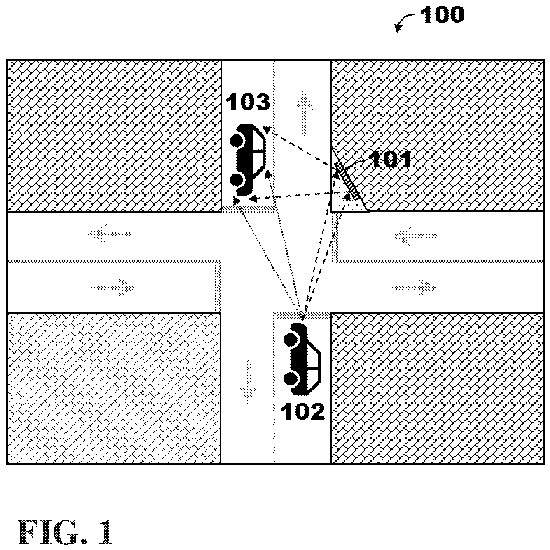

FIG. 1 shows an exemplary environment 100, in which reliable avoidance of false-positive detections in a reflective surface 101 is required for safe navigation. The environment 100 provides an intersection of roads, where an incoming vehicle 103 approaches the intersection and the reflective surface 101 reflects the appearance of the vehicle 103 to the host vehicle 102. An object detection system of the host vehicle 102 may detect two vehicles approaching the intersection, the real vehicle 103 and its own reflection in the reflective surface 101. The detected reflection from the reflective surface 101 is a false-positive detection in this case, for example.

For safely performing a passing or lane incorporation manoeuvre, the host vehicle 102 not only requires reliable detection of the incoming vehicle 103 but also reliable recognition that the image reflected in the reflective surface 101 is a false-positive detection. Accordingly, environments where a reduction of false-positive detections due to reflective objects is necessary, are, but not limited to, buildings with extensive windowed areas, water paddles, mirror-like surfaces and the like.

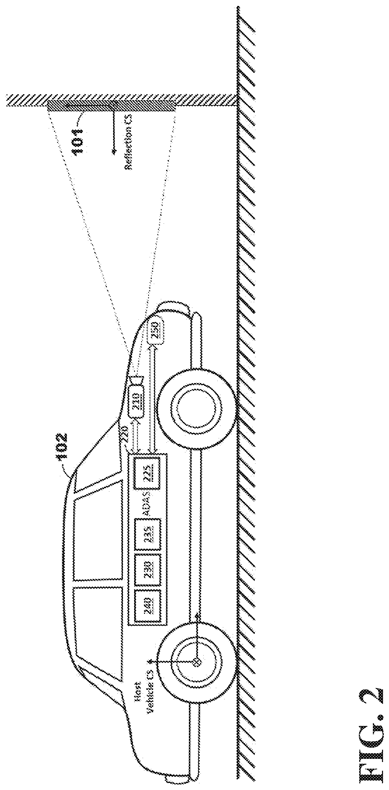

FIG. 2 shows a schematic of the vehicle 102 and the reflective surface 101 as shown in Fig. 1. A system 220 is provided for reducing false-positive detections due to reflective surfaces. The system 220 is implemented by a host vehicle 102 with automated driving capabilities. The system 220 comprises a processor 225, a memory 230, a control unit 235 and a communications subsystem 240, for example. The system 220 is for example ADAS (Advanced driver-assistance system). ADAS are electronic systems in a vehicle that use advanced technologies to assist the driver.

The system 220 may further comprise an image capture device 210 configured to capture a video sequence formed from a set of input image frames, including an exemplary reflective surface 101. The image capture device 210 can be a calibrated monocular camera.

The processor 225 and memory 230 are configured to train and deploy a neural network to perform object detection in the environment and subsequently differentiate objects detected in reflective and non-reflective areas for a reduced false-positive detection rate. The processor 225 may be embodied as any type of processor for performing the described tasks. For instance, the processor 225 may be embodied as a single or multi-core processor(s), or other processing/controlling circuit. Likewise, the memory 230 may be embodied as any type of volatile or non-volatile memory for short-term or long-term data storage, for the performing of the methods described herein, such as hard disk drives, solid-state drives, or other data storage devices.

The memory 230 may store image data, training data, other data used for object detection as well as various software and drivers used during operation of the system 220. The communication subsystem 240 may be configured to use wireless technology and associated protocols to enable communication between the system 220 and other remote computer networks or devices, such as but not limited to, vehicles with automated driving capabilities via V2V communication or intelligent infrastructure devices via Vehicle-to-infrastructure (V2I) communication. The control unit 235 may be embodied as any compact controlling circuit designed to govern a specific operation in an embedded system.

The system 220 may further comprise a light emission subsystem 250 that is controlled by the control unit 235 for signalling of light patterns with the purpose of a verification process.

The system 220 is configured to implement the methods shown in the following figures.

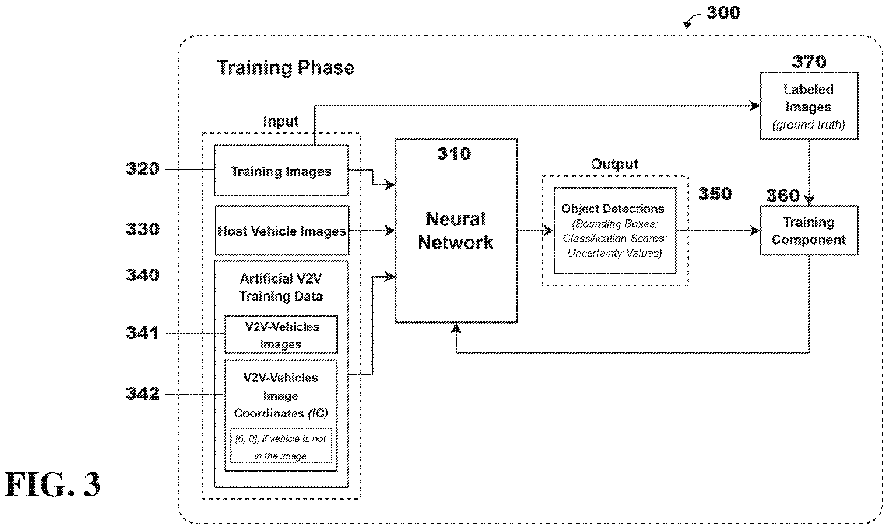

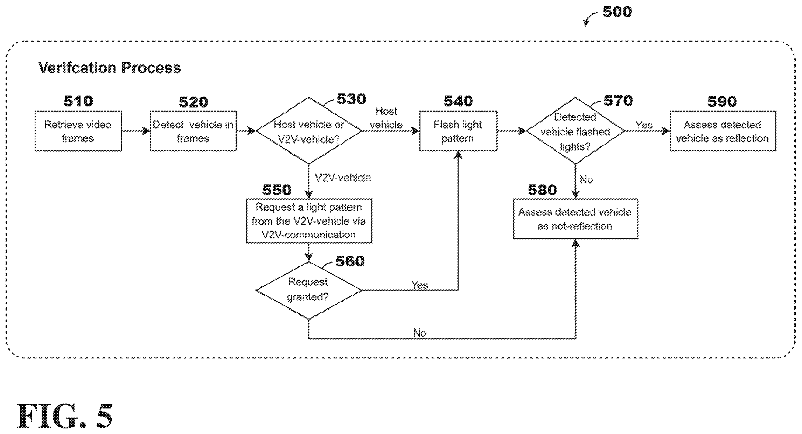

The methods as described in FIG. 3-7 (except for FIG. 5) provide two phases: a Training Phase and an Inference Phase. FIG. 5 shows a verification process of a false-positive detection in case of a specific edge case scenario.

FIG. 3 is a block diagram showing training of a neural network 310 to perform object detection. The neural network 310 is trained to distinguish between real objects and reflected objects (false-positives detections).

FIG. 3 shows a Training Phase for a method 300 for false-positive detection reduction. Training data for training the neural network 310 comprises training images 320 of driving scenarios including selected objects to be detected, their respective reflections, as well reflections of objects which are not in the image. The training images 320 have corresponding labelled images 370 as ground truth for the training of the neural network 310.

To enhance the ability of the neural network 310 to distinguish between real objects and reflected objects, the neural network 310 is provided with exemplary host vehicle images 330 during the training phase. This facilitates the network to associate detections made in areas, where the host vehicle's appearance is also recognized, as detections with a greater probability of being reflections (false-positive detections), given that the detection of the host vehicle appearance likely points out to a reflection of the host vehicle itself. The additional information provided to the network 310 can thus reduce the false-positive detection rate.

Optionally, the method is enhanced to provide the neural network 310 with exemplary artificial Vehicle-to-vehicle (V2V) training data 340 composed of V2V-vehicles images 341 and corresponding V2V-vehicle coordinates 342, expressed in a local image coordinate system (the coordinate system is shown as "host vehicle CS" in FIG. 2). This allows the network 310 to make use of further information provided by V2V-communication to associate detections made in areas where the connected V2V-vehicles appearances are recognized as detections with a greater probability of being reflections, if these also do not correspond to the actual V2V-vehicles positions inferred from the given coordinates.

For instance, if two vehicles are detected with the appearance of a communicating V2V-vehicle, it is expected that one detection corresponds to the actual communicating V2V-vehicle and the other to its reflection. The network 310 can, therefore, use this additional information to associate only the areas, where these detections were made and the position of the detection does not coincide with the coordinates provided by the V2V training data 342, as detection areas with a greater probability of being reflection areas. Also, if a vehicle is detected with the appearance of a communicating V2V-vehicle, but the detection also matches the provided image coordinates, this information allows the network 310 to associate the detected vehicle with matching coordinates as a real oncoming vehicle. In the special case that only the reflection of the V2V-vehicle exists in the training image, the image coordinates will be set to [0, 0], meaning that the actual V2V-vehicle cannot be found in the image.

The training component 360 trains the neural network 310. The neural network includes an ordered sequence of supervised operations (i.e., layers) that are learned on a set of labelled images 370 training objects, such as images and their true labels. The set of labelled images 370 comprises a database of images of intended objects each labelled to indicate a type using a labelling scheme of interest (such as class labels corresponding to reflection or non-reflection objects). Fine-grained labels or broader class labels are contemplated.

The supervised layers of the neural network 310 are trained on the training images 320, their labelled counterparts 370, the host vehicle images 330 and optionally the artificial V2V training data 340 to generate a prediction that consists of object detections 350 for new, unlabelled input in the Inference Phase. The object detections output comprises geometric coordinates of the respective detection bounding boxes, a corresponding classification score and an associated uncertainty value. Furthermore, a reflection score can be added to assess the likelihood of a given detection to be a reflection. Additionally, similarity scores can be further implemented to evaluate the similarity of the detection to the host vehicle and the input image of the V2Vvehicle respectively.

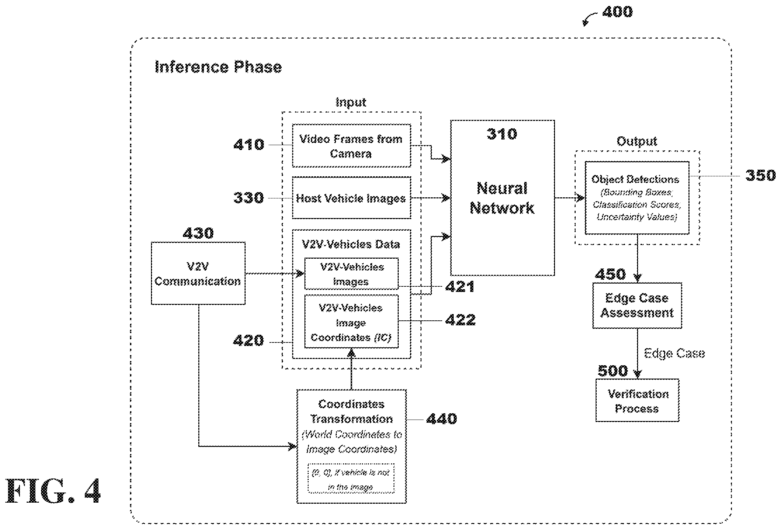

FIG. 4 is a block diagram showing inferring of object detections from the trained neural network 310 of FIG. 3. The block diagram depicts the method 400 for object detections, for example from the trained neural network 310, during operation to distinguish between real objects and reflected objects (false-positive detections). The neural network 310 is inferred for false-positive detection reduction, where the knowledge from the previously trained neural network 310 is applied to infer object detections on unknown operational data.

According to the method 400 for object detection, the trained neural network 310, for example, receives input video frames 410 from the image capturing device 210, for example, as well as host vehicle images 330. Real-time V2V-vehicle data 420, including V2V-vehicles images 421 and V2V-vehicles image coordinates 422 are collected via a V2V-Communication module 430 and may be further input into the network 310. The received coordinates of the V2V-vehicles are expected to be expressed in a world coordinate system or a local vehicle coordinate system (see FIG. 2). Module 440 transforms the received coordinates from the V2V-vehicle into coordinates expressed in the local image coordinate system. Also, in case that the coordinates of the V2V-vehicle could not be expressed in the local image coordinate system, because the real V2V-vehicle is not captured by the image capturing device 210 (but probably its reflection is captured by the device), the Image Coordinates (IC) are set to [0, 0]. The trained neural network 310 consequently outputs a prediction of an object detection 350 comprising the geometric coordinates of the bounding box of each detection, corresponding classification scores, associated uncertainty values, respective reflection and similarity scores.

To enhance the ability of the neural network 310 to distinguish between real objects and reflected objects, exemplary host vehicle images 330 are provided, so that the network learns to associate detections made in areas, where the host vehicle appearance is also recognized, as detections with a greater probability of being reflections. However, the possibility exists that a real oncoming vehicle with a similar appearance to the host vehicle (or a communication V2V-vehicle) is coincidentally in the field of view of the image capture device 210. If the automated vehicle would mistake the oncoming vehicle as a false-positive detection, this would seriously endanger the integrity of the host vehicle and its passengers.

For such edge case scenario, the object detection 350 output of the network is subsequently forwarded into an Edge Case Assessment 450 module that evaluates if the uncertainty associated with the reflection score of the detection is lower than a determined threshold, while the similarity score regarding the host vehicle or a V2V-vehicle is greater than another determined threshold. This means that the module 450 evaluates whether the detected object is of a similar appearance to the host vehicle or a communicating V2V-vehicle and the value of uncertainty of the network to assess the detection as a reflection or not. In case module 450 detects such an Edge Case, a further Verification Process method 500, shown in FIG. 5, is employed for confirming whether the detected object is a false-positive detection.

FIG. 5 is a flow chart for edge case verification. A verification method 500 determines whether the detected vehicle is a false-positive detection of the host vehicle (or V2V-vehicle) or if it is a real oncoming vehicle with similar appearance.

At step 510, the relevant video frames are retrieved from the image capture device 210. At step 520, the vehicle to be verified, given by step 450, (vehicle with a similar appearance to the host vehicle or V2V-vehicle) is detected within the image frames. Subsequently, at step 530, it is evaluated whether the detected vehicle resembles the host vehicle or a connected V2Vvehicle. If the detection corresponds to the host vehicle appearance, the method continues with step 540, where a light pattern is emitted. For this, the control unit 235 of the host vehicle 102 commands the light emission subsystem 250 to produce a light pattern with a frequency and intensity that is barely or not noticeable for human drivers.

If the detection corresponds to the V2V-vehicle appearance, a request for a light pattern emission is sent to the V2V-vehicle via V2V-communication at step 550. At step 560, it is evaluated, if the request was granted by the V2V-vehicle. If the request is not granted, the detection is assessed as a real oncoming vehicle at step 580 to ensure the safety of the host vehicle. Else, if the request was positively granted, the method continues with step 540, where the V2V-vehicle emits a light pattern with a frequency and intensity that is not or barely noticeable for human drivers.

Once the light pattern is emitted at step 540, the method continues with step 570, where it is assessed, whether the vehicle detected within the image frames behaves in an equal manner and emitted the same light pattern. If this is the case, the detected vehicle is then classified as a false-positive detection (a reflection of the host vehicle or the V2Vvehicle) at step 590, else the detected vehicle is classified as a real oncoming vehicle at step 580.

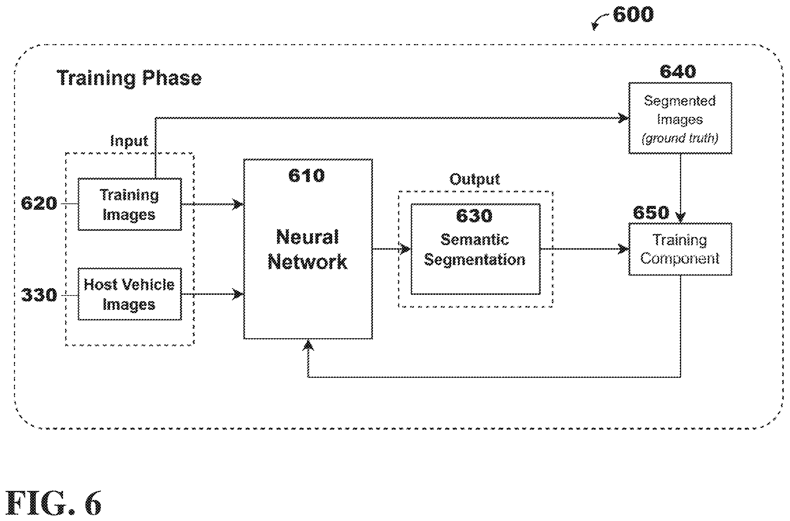

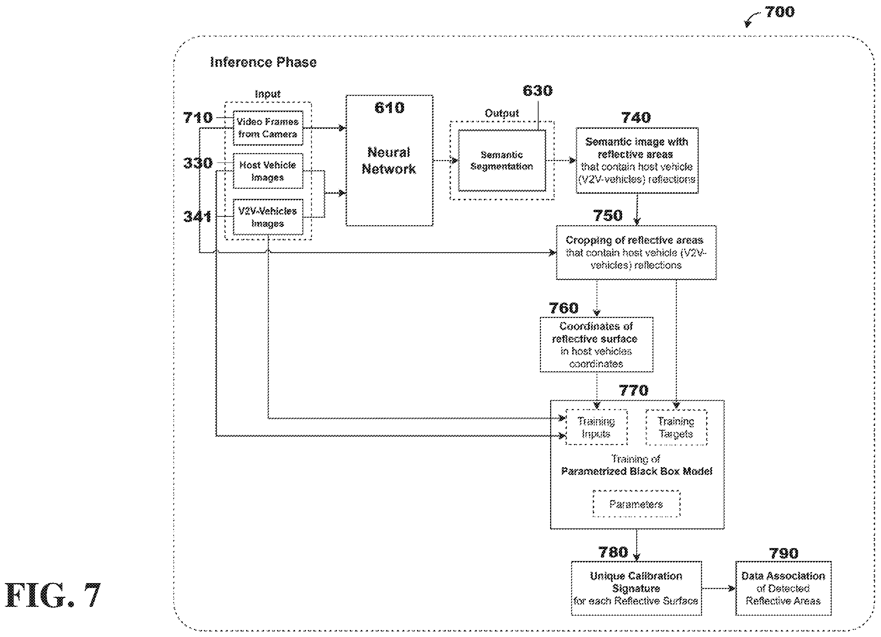

FIG. 6 is a block diagram showing training of a neural network 610 to perform semantic segmentation. FIG. 7 is a block diagram showing inferring semantic segmentation from the trained neural network 610. FIG. 6 and FIG. 7 are embodiments, where a unique identifier is generated for any detected reflective surface for later recognition purposes.

FIG. 6 shows a method 600 for training a neural network 610 to perform a semantic segmentation 630 to identify reflective surfaces 101 in an image that contains the host vehicle 102 or a V2V-connected vehicle as part of the reflection. This training phase for identification of reflective surfaces comprises additional image input.

The neural network 610 is trained with data that comprises training images 620 of driving scenarios depicting reflective areas, and host vehicle images 330 as additional image input. The neural network 610 can be trained to identify reflective areas containing objects that resemble the appearance of the images presented in the image input, such as but not limited to the host vehicle images 330. The training images 620 are provided with corresponding segmented images 640 as ground truth for the training of the neural network 610. The training component 650 trains the neural network 610 with the training images 620, their segmented counterparts 640 and the host vehicle images 330 to generate a semantic segmented image 630, where each pixel of the original input image is classified as a "reflective area that contains the host vehicle or a V2V-vehicle" or as a non-relevant pixel.

FIG. 7 is a schematic overview of a method 700 for inferring semantic segmentation 630 from the trained neural network 610. The output is used to train a parametrized black-box model 770 to subsequently derive a Unique Calibration Signature 780 for each respective reflective area from the corresponding trained parameters. This method 700 is the Inference Phase for identification of reflective surfaces.

During the inference phase, the trained neural network 610 receives as input video frames 710 from the image capturing device 210, e.g. a camera, as well as host vehicle images 330. Alternatively, real-time V2V-vehicle images 341 can also be input into the network 610 to identify reflective surfaces 101 providing the respective V2V-vehicle.

The trained neural network 610 outputs a semantic segmented image 740 with reflective areas that contain the host vehicle or the V2Vvehicle reflections. This segmentation outputs are used for cropping these relevant areas from the original image frames 750. A parametrized Black-Box Model 770 is then trained to reconstruct the provided host vehicle images 330 or V2V-vehicles images 341 from the cropped reflection images 750 over several video frames. For this, the parametrized Black-Box Model 770 receives the host vehicle images 330 and the V2V-vehicles images 341 as training inputs, as well as the coordinates of the reflective surfaces 760 in the host vehicle coordinate system (VC in FIG. 2). These coordinates are calculated from the detected reflections within the cropped images 750 with the help of the calibrated image captured device. Correspondingly, the cropped images of the reflective surfaces that contain the host vehicle or the V2Vvehicle are used as training targets.

The parameters of the trained model 770 can be used as a Unique Calibration Signature 780 of the respective reflective surface. This unique identifier can be used for later recognition purposes, for example, for data association 790 of detected reflective areas in object tracking tasks.

The system 220 of FIG. 2 is suitable for implementing one or more neural networks obtained by the disclosed embodiments as described herein.

The processor 225 is implemented by hardware and software. The processor 225 (similarly as other processing circuitry described above) may be implemented as one or more CPU chips, cores (for example, a multi-core processor), FPGAs, ASICs, and DSPs or NPUs. The processor 430 may include a neural network 310, 610 module.

The memory 230 includes one or more disks, tape drives, and solid-state drives, and may be used as an overflow data storage device, to store programs when such programs are selected for execution, and to store instructions and data that are read during program execution. The memory 230 may be volatile and/or non-volatile and may be read-only memory (read-only memory, ROM), random access memory (random access memory, RAM), ternary content-addressable memory (ternary content-addressable memory, TCAM), and/or static random-access memory (static random-access memory, SRAM).

A person skilled in the art can understand that, the functions described with reference to various illustrative logical blocks, modules, and method steps disclosed and described in this specification can be implemented by hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium such as a data storage medium, or may include any communications medium that facilitates transmission of a computer program from one place to another (for example, according to a communications protocol). In this manner, the computer-readable medium may generally correspond to: (1) a non-transitory tangible computer-readable storage medium, or (2) a communications medium such as a signal or a carrier. The data storage medium may be any usable medium that can be accessed by one or more computers or one or more processors to retrieve instructions, code, and/or data structures for implementing the technologies described in this application. A computer program product may include a computer-readable medium.

By way of example but not limitation, such computer-readable storage media may include a RAM, a ROM, an EEPROM, a CD-ROM or another compact disc storage apparatus, a magnetic disk storage apparatus or another magnetic storage apparatus, a flash memory, or any other medium that can be used to store desired program code in a form of an instruction or a data structure and that can be accessed by a computer. In addition, any connection is properly referred to as a computer-readable medium. For example, if an instruction is transmitted from a website, a server, or another remote source through a coaxial cable, an optical fiber, a twisted pair, a digital subscriber line (digital subscriber line, DSL), or a wireless technology such as infrared, radio, or microwave, the coaxial cable, the optical fiber, the twisted pair, the DSL, or the wireless technology such as infrared, radio, or microwave is included in a definition of the medium. However, it should be understood that the computer-readable storage medium and the data storage medium do not include connections, carriers, signals, or other transitory media, but actually mean non-transitory tangible storage media. Disks and discs used in this specification include a compact disc (compact disc, CD), a laser disc, an optical disc, a digital versatile disc (digital versatile disc, DVD), and a Blu-ray disc. The disks usually reproduce data magnetically, whereas the discs reproduce data optically by using lasers. Combinations of the foregoing items should also be included in the scope of the computer-readable media.

An instruction may be executed by one or more processors such as one or more digital signal processors (digital signal processor, DSP), general-purpose microprocessors, application-specific integrated circuits (application-specific integrated circuit, ASIC), field programmable gate arrays (field programmable gate array, FPGA), or other equivalent integrated or discrete logic circuits. Therefore, the term "processor" used in this specification may be any of the foregoing structures or any other structure suitable for implementing the technologies described in this specification. In addition, in some aspects, the functions described with reference to the illustrative logical blocks, modules, and steps described in this specification may be provided within dedicated hardware and/or software modules configured for encoding and decoding, or may be incorporated into a combined codec. In addition, the technologies may be all implemented in one or more circuits or logic elements.

The technologies in this application may be implemented in various apparatuses or devices. Various components, modules, or units are described in this application to emphasize functional aspects of the apparatuses configured to implement the disclosed technologies, but are not necessarily implemented by different hardware units. Actually, as described above, various units may be combined into a hardware unit in combination with appropriate software and/or firmware, or may be provided by interoperable hardware units (including one or more processors described above).

## Claims

1. A system (220) for object detection, the system (220) comprising a processor (225) configured to implement a neural network module, the neural network module being configured to:
• receive, as inputs of a neural network (310) of the neural network module,
∘ at least one input video frame (410) as a sequence of input image frames, and
∘ a plurality of host vehicle images (330) of a host vehicle;
• perform, by the neural network (310) of the neural network module, an object detection (350) based on the at least one input video frame (410) and the plurality of host vehicle images (330),
∘ wherein the object detection (350) comprises a detection bounding box of the object detection (350) and a corresponding similarity score indicating a similarity of the object to the host vehicle of the plurality of host vehicle images (330);
• differentiate, by the neural network (310) of the neural network module, the object as a real object or a reflected object based on the object detection (350), thereby reducing false-positive detections.

2. The system (220) according to claim 1, wherein the processor (225) is further configured to implement an edge case assessment module configured to evaluate the object detection (350) output of the neural network (310) to recognize an edge case.

3. The system (220) according to claim 2, wherein the edge case assessment (450) module is configured to verify the detected object as a false-positive detection.

4. The system (220) according to any of the claims 1 to 3, wherein the detected object is a host vehicle (102), a V2V-vehicle or an oncoming vehicle (103) having similar appearance as the host vehicle (102).

5. The system (220) according to any of the claims 1 to 4, wherein the neural network module is further configured to:
- perform semantic segmentation (630) to identify a reflective surface (101) in the at least one input image frame,
- provide (740) at least one sematic image with reflective areas containing the host vehicle (102) or a V2V-vehicle as part of a reflection area.

6. The system (220) according to any of the claims 1 to 5, wherein the differentiation of the object is also based on a reflection score indicating a likelihood that the object is a reflection.

7. A method (400) for object detection performed by a processor (225) configured to implement a neural network module, the method comprising the steps of:
• receiving, by the neural network module, as inputs of a neural network (310) of the neural network module,
∘ at least one input video frame (410) as a sequence of input image frames, and
∘ a plurality of host vehicle images (330) of a host vehicle;
• performing, by the neural network of the neural network module, an object detection (350) based on the at least one input video frame (410) and the plurality of host vehicle images (330),
∘ wherein the object detection (350) comprises a detection bounding box of the object detection (350) and a corresponding similarity score indicating a similarity of the object to the host vehicle of the plurality of host vehicle images (330);
• differentiating, by the neural network of the neural network module, the object as a real object or a reflected object based on the object detection, thereby reducing false-positive detections.

8. The method (400) according to claim 7, wherein the processor (225) is further configured to implement an edge case assessment module for performing an edge case assessment (450), the edge case assessment (450) comprising:
- evaluating the object detection (350) output of the neural network (310) to recognize an edge case.

9. The method (400) according to any of the claims 7 or 8, wherein the detected object is a host vehicle (102), a V2V-vehicle or an oncoming vehicle (103) having similar appearance as a host vehicle (102).

10. The method (400) according to claim 9, wherein the edge case assessment (450) comprises verifying the detected vehicle as false-positive detection, comprising:
- retrieving (510) the at least one input video frame;
- detecting a vehicle within the at least one input video frame;
- evaluating whether the detected vehicle resembles the host vehicle or a V2V-vehicle;
- emitting a light pattern, if the detection corresponds to the host vehicle appearance, or, upon request for a light pattern emission to the V2V-vehicle, if the detection corresponds to the V2V-vehicle appearance;
- assessing whether the vehicle detected within the image frames emitted the same light pattern for identifying the vehicle as false-positive detection.

11. The method (400) to any of the claims 7 to 10, wherein the neural network (310) performs the method steps:
- performing semantic segmentation (630) to identify the reflective surface (101) in an input image frame of the input image frames,
- providing (740) at least one sematic image with reflective areas containing the host vehicle (102) or a V2V-vehicle as part of a reflection area.

12. The method according to claim 11, wherein a unique calibration signature (780) is provided for each respective reflective area of the sematic images.

13. A self-driving vehicle including the system of any one of claims 1 to 6 for performing the methods of any of the claims 7 to 12.

14. A computer program product stored on a non-transitory medium and including code instructions, which, when executed on one or more processors, cause the one or more processors to execute the method according to any of claims 7 to 12.

## Patentansprüche

1. System (220) zur Objekterkennung, wobei das System (220) einen Prozessor (225) umfasst, der dazu konfiguriert ist, ein Modul eines neuronalen Netzwerks zu implementieren, wobei das Modul des neuronalen Netzwerks zu Folgendem konfiguriert ist:
• Empfangen von Folgendem als Eingaben eines neuronalen Netzwerks (310) des Moduls des neuronalen Netzwerks
∘ mindestens einem Eingabevideoframe (410) als eine Sequenz von Eingabebildframes und
∘ einer Vielzahl von Host-Fahrzeugbildern (330) eines Host-Fahrzeugs;
• Durchführen einer Objekterkennung (350) durch das neuronale Netzwerk (310) des Moduls des neuronalen Netzwerks basierend auf dem mindestens einen Eingabevideoframe (410) und der Vielzahl von Host-Fahrzeugbildern (330),
∘ wobei die Objekterkennung (350) ein Erkennungsbegrenzungsfeld der Objekterkennung (350) und eine entsprechende Ähnlichkeitsbewertung umfasst, die eine Ähnlichkeit des Objekts mit dem Host-Fahrzeug der Vielzahl von Host-Fahrzeugbildern (330) anzeigt;
• Unterscheiden des Objekts durch das neuronale Netzwerk (310) des Moduls des neuronalen Netzwerks als ein echtes Objekt oder ein reflektiertes Objekt basierend auf der Objekterkennung (350), wodurch falsch-positive Erkennungen reduziert werden.

2. System (220) nach Anspruch 1, wobei der Prozessor (225) ferner dazu konfiguriert ist, ein Grenzfallbeurteilungsmodul zu implementieren, das dazu konfiguriert ist, die Objekterkennungs(350)-Ausgabe des neuronalen Netzwerks (310) auszuwerten, um einen Grenzfall auszumachen.

3. System (220) nach Anspruch 2, wobei das Grenzfallbeurteilungs(450)-Modul dazu konfiguriert ist, das erkannte Objekt als eine falsch-positive Erkennung zu verifizieren.

4. System (220) nach einem der Ansprüche 1 bis 3, wobei das erkannte Objekt ein Host-Fahrzeug (102), ein V2V-Fahrzeug oder ein entgegenkommendes Fahrzeug (103), aufweisend ein ähnliches Aussehen wie das Host-Fahrzeug (102), ist.

5. System (220) nach einem der Ansprüche 1 bis 4, wobei das Modul des neuronalen Netzwerks ferner zu Folgendem konfiguriert ist:
- Durchführen einer semantischen Segmentierung (630), um eine reflektierende Oberfläche (101) in dem mindestens einen Eingabebildframe zu identifizieren,
- Bereitstellen (740) mindestens eines sematischen Bildes mit reflektierenden Bereichen, die das Host-Fahrzeug (102) oder ein V2V-Fahrzeug als Teil eines Reflexionsbereichs enthalten.

6. System (220) nach einem der Ansprüche 1 bis 5, wobei die Unterscheidung des Objekts auch auf einer Reflexionsbewertung basiert, die eine Wahrscheinlichkeit anzeigt, dass das Objekt eine Reflexion ist.

7. Verfahren (400) zur Objekterkennung, das von einem Prozessor (225) durchgeführt wird, der dazu konfiguriert ist, ein Modul eines neuronalen Netzwerks zu implementieren, wobei das Verfahren die folgenden Schritte umfasst:
• Empfangen von Folgendem als Eingaben eines neuronalen Netzwerks (310) des Moduls des neuronalen Netzwerks durch das Modul des neuronalen Netzwerks
∘ mindestens einem Eingabevideoframe (410) als eine Sequenz von Eingabebildframes und
∘ einer Vielzahl von Host-Fahrzeugbildern (330) eines Host-Fahrzeugs;
• Durchführen einer Objekterkennung (350) durch das neuronale Netzwerk des Moduls des neuronalen Netzwerks basierend auf dem mindestens einen Eingabevideoframe (410) und der Vielzahl von Host-Fahrzeugbildern (330),
∘ wobei die Objekterkennung (350) ein Erkennungsbegrenzungsfeld der Objekterkennung (350) und eine entsprechende Ähnlichkeitsbewertung umfasst, die eine Ähnlichkeit des Objekts mit dem Host-Fahrzeug der Vielzahl von Host-Fahrzeugbildern (330) anzeigt;
• Unterscheiden des Objekts durch das neuronale Netzwerk des Moduls des neuronalen Netzwerks als ein echtes Objekt oder ein reflektiertes Objekt basierend auf der Objekterkennung, wodurch falsch-positive Erkennungen reduziert werden.

8. Verfahren (400) nach Anspruch 7, wobei der Prozessor (225) ferner dazu konfiguriert ist, ein Grenzfallbeurteilungsmodul zu implementieren, um eine Grenzfallbeurteilung (450) durchzuführen, wobei die Grenzfallbeurteilung (450) Folgendes umfasst:
- Auswerten der Objekterkennungs(350)-Ausgabe des neuronalen Netzwerks (310), um einen Grenzfall auszumachen.

9. Verfahren (400) nach einem der Ansprüche 7 bis 8, wobei das erkannte Objekt ein Host-Fahrzeug (102), ein V2V-Fahrzeug oder ein entgegenkommendes Fahrzeug (103), aufweisend ein ähnliches Aussehen wie ein Host-Fahrzeug (102), ist.

10. Verfahren (400) nach Anspruch 9, wobei die Grenzfallbeurteilung (450) ein Verifizieren des erkannten Fahrzeugs als falsch-positive Erkennung umfasst, umfassend:
- Abrufen (510) des mindestens einen Eingabevideoframes;
- Erkennen eines Fahrzeugs innerhalb des mindestens einen Eingabevideoframes;
- Auswerten, ob das erkannte Fahrzeug dem Host-Fahrzeug oder einem V2V-Fahrzeug gleicht;
- Aussenden eines Lichtmusters, wenn die Erkennung dem Aussehen des Host-Fahrzeugs entspricht, oder auf Anfrage zur Aussendung eines Lichtmusters an das V2V-Fahrzeug, wenn die Erkennung dem Aussehen des V2V-Fahrzeugs entspricht;
- Beurteilen, ob das innerhalb der Bildframes erkannte Fahrzeug dasselbe Lichtmuster ausgesendet hat, um das Fahrzeug als falsch-positive Erkennung zu identifizieren.

11. Verfahren (400) nach einem der Ansprüche 7 bis 10, wobei das neuronale Netzwerk (310) die folgenden Verfahrensschritte durchführt:
- Durchführen einer semantischen Segmentierung (630), um die reflektierende Oberfläche (101) in einem Eingabebildframe der Eingabebildframes zu identifizieren,
- Bereitstellen (740) mindestens eines sematischen Bildes mit reflektierenden Bereichen, die das Host-Fahrzeug (102) oder ein V2V-Fahrzeug als Teil eines Reflexionsbereichs enthalten.

12. Verfahren nach Anspruch 11, wobei eine eindeutige Kalibrierungssignatur (780) für jeden jeweiligen reflektierenden Bereich der sematischen Bilder bereitgestellt ist.

13. Selbstfahrendes Fahrzeug, einschließlich des Systems nach einem der Ansprüche 1 bis 6, um die Verfahren nach einem der Ansprüche 7 bis 12 durchzuführen.

14. Computerprogrammprodukt, das auf einem nichttransitorischen Medium gespeichert ist und Codeanweisungen einschließt, die, wenn sie auf einem oder mehreren Prozessoren ausgeführt werden, den einen oder die mehreren Prozessoren dazu veranlassen, das Verfahren nach einem der Ansprüche 7 bis 12 auszuführen.

## Revendications

1. Système (220) de détection d'objet, le système (220) comprenant un processeur (225) configuré pour implémenter un module de réseau neuronal, le module de réseau neuronal étant configuré pour :
• recevoir, en tant qu'entrées d'un réseau neuronal (310) du module de réseau neuronal,
∘ au moins une image vidéo d'entrée (410) sous forme de séquence d'images d'entrée, et
∘ une pluralité d'images de véhicule hôte (330) d'un véhicule hôte ;
• réaliser, par le réseau neuronal (310) du module de réseau neuronal, une détection d'objet (350) sur la base de l'au moins une image vidéo d'entrée (410) et la pluralité d'images de véhicule hôte (330),
∘ dans lequel la détection d'objet (350) comprend une boîte englobante de détection de la détection d'objet (350) et un score de similarité correspondant indiquant une similarité de l'objet avec le véhicule hôte de la pluralité d'images de véhicule hôte (330) ;
• différencier, par le réseau neuronal (310) du module de réseau neuronal, l'objet comme un objet réel ou un objet réfléchi sur la base de la détection d'objet (350), réduisant ainsi les détections faussement positives.

2. Système (220) selon la revendication 1, dans lequel le processeur (225) est également configuré pour implémenter un module d'évaluation de cas limites configuré pour évaluer la sortie de détection d'objet (350) du réseau neuronal (310) pour reconnaître un cas limite.

3. Système (220) selon la revendication 2, dans lequel le module d'évaluation de cas limites (450) est configuré pour vérifier l'objet détecté comme une détection faussement positive.

4. Système (220) selon l'une quelconque des revendications 1 à 3, dans lequel l'objet détecté est un véhicule hôte (102), un véhicule V2V ou un véhicule venant en sens inverse (103) ayant une apparence similaire à celle du véhicule hôte (102).

5. Système (220) selon l'une quelconque des revendications 1 à 4, dans lequel le module de réseau neuronal est également configuré pour :
- réaliser une segmentation sémantique (630) pour identifier une surface réfléchissante (101) dans l'au moins une image d'entrée,
- fournir (740) au moins une image sémantique avec des zones réfléchissantes contenant le véhicule hôte (102) ou un véhicule V2V dans le cadre d'une zone de réflexion.

6. Système (220) selon l'une quelconque des revendications 1 à 5, dans lequel la différenciation de l'objet est aussi basée sur un score de réflexion indiquant une probabilité que l'objet soit une réflexion.

7. Procédé (400) de détection d'objet réalisé par un processeur (225) configuré pour implémenter un module de réseau neuronal, le procédé comprenant les étapes suivantes :
• la réception, par le module de réseau neuronal, comme entrées d'un réseau neuronal (310) du module de réseau neuronal,
∘ d'au moins une image vidéo d'entrée (410) sous forme de séquence d'images d'entrée, et
∘ d'une pluralité d'images de véhicule hôte (330) d'un véhicule hôte ;
• la réalisation, par le réseau neuronal du module de réseau neuronal, d'une détection d'objet (350) sur la base de l'au moins une image vidéo d'entrée (410) et de la pluralité d'images de véhicule hôte (330),
∘ dans lequel la détection d'objet (350) comprend une boîte englobante de détection de la détection d'objet (350) et un score de similarité correspondant indiquant une similarité de l'objet avec le véhicule hôte de la pluralité d'images de véhicule hôte (330) ;
• la différenciation, par le réseau neuronal du module de réseau neuronal, de l'objet comme un objet réel ou un objet réfléchi sur la base de la détection d'objet, réduisant ainsi les détections faussement positives.

8. Procédé (400) selon la revendication 7, dans lequel le processeur (225) est également configuré pour implémenter un module d'évaluation de cas limites pour réaliser une évaluation de cas limites (450), l'évaluation des cas limites (450) comprenant :
- l'évaluation de la sortie de détection d'objet (350) du réseau neuronal (310) pour reconnaître un cas limite.

9. Procédé (400) selon l'une quelconque des revendications 7 ou 8, dans lequel l'objet détecté est un véhicule hôte (102), un véhicule V2V ou un véhicule venant en sens inverse (103) ayant une apparence similaire à celle d'un véhicule hôte (102).

10. Procédé (400) selon la revendication 9, dans lequel l'évaluation de cas limites (450) comprend la vérification du véhicule détecté comme une détection faussement positive, comprenant :
- la récupération (510) de l'au moins une image vidéo d'entrée ;
- la détection d'un véhicule dans l'au moins une image vidéo d'entrée ;
- le fait d'évaluer si le véhicule détecté ressemble au véhicule hôte ou à un véhicule V2V ;
- l'émission d'un motif lumineux, si la détection correspond à l'apparence du véhicule hôte, ou, sur demande d'émission d'un motif lumineux vers le véhicule V2V, si la détection correspond à l'apparence du véhicule V2V ;
- le fait d'évaluer si le véhicule détecté dans les images a émis le même motif lumineux pour identifier le véhicule en cas de fausse détection positive.

11. Procédé (400) selon l'une quelconque des revendications 7 à 10, dans lequel le réseau neuronal (310) réalise les étapes du procédé :
- la réalisation d'une segmentation sémantique (630) pour identifier la surface réfléchissante (101) dans une image d'entrée des images d'entrée,
- la fourniture (740) d'au moins une image sémantique avec des zones réfléchissantes contenant le véhicule hôte (102) ou un véhicule V2V dans le cadre d'une zone de réflexion.

12. Procédé selon la revendication 11, dans lequel une signature d'étalonnage unique (780) est fournie pour chaque zone réfléchissante respective des images sémantiques.

13. Véhicule autonome comportant le système selon l'une quelconque des revendications 1 à 6 pour réaliser les procédés selon l'une quelconque des revendications 7 à 12.

14. Produit de programme informatique stocké sur un support non transitoire et comportant des instructions de code, qui, lorsqu'elles sont exécutées sur un ou plusieurs processeurs, amènent les un ou plusieurs processeurs à exécuter le procédé selon l'une quelconque des revendications 7 à 12.
